(19) Europäisches Patentamt
European Patent Office
Office européen des brevets

(11) EP 0 990 003 B1

(12) **EUROPÄISCHE PATENTSCHRIFT**

(45) Veröffentlichungstag und Bekanntmachung des Hinweises auf die Patenterteilung:
**04.09.2002 Patentblatt 2002/36**

(21) Anmeldenummer: **98932131.0**

(22) Anmeldetag: **08.06.1998**

(51) Int Cl.[7]: **C08F 4/64**, C08F 10/00, C07F 17/00

(86) Internationale Anmeldenummer:
**PCT/EP98/03406**

(87) Internationale Veröffentlichungsnummer:
**WO 98/056831 (17.12.1998 Gazette 1998/50)**

(54) **NEUE KATALYSATORSYSTEME FÜR (CO-)POLYMERISATIONSREAKTIONEN, METALLOCENAMIDHALOGENIDE UND IHRE VERWENDUNG**

NEW CATALYST SYSTEMS FOR (CO-)POLYMERIZATION REACTIONS, METALLOCENE AMIDE HALOGENIDES AND USE THEREOF

NOUVEAUX SYSTEMES CATALYTIQUES POUR REACTIONS DE (CO)POLYMERISATION, HALOGENURES DE METALLOCENAMIDES ET LEUR UTILISATION

(84) Benannte Vertragsstaaten:
**AT BE CH DE DK ES FI FR GB IE IT LI NL PT SE**

(30) Priorität: **10.06.1997 DE 19724465**

(43) Veröffentlichungstag der Anmeldung:
**05.04.2000 Patentblatt 2000/14**

(60) Teilanmeldung:
**00101864.7 / 1 028 123**

(73) Patentinhaber: **Peroxid-Chemie GmbH & Co. KG.**
**82049 Pullach (DE)**

(72) Erfinder:
- **MUNCK, Florian**
  **D-82110 Germering (DE)**
- **ZEISS, Werner**
  **D-82547 Eurasburg (DE)**
- **HARTMANN, Christoph**
  **D-82041 Oberhaching (DE)**
- **VOGEL, Alexander**
  **D-80805 München (DE)**
- **DETIG, Andreas**
  **D-80469 München (DE)**

(74) Vertreter: **Böhm, Brigitte, Dipl.-Chem. Dr. et al**
**Weickmann & Weickmann**
**Patentanwälte**
**Postfach 860 820**
**81635 München (DE)**

(56) Entgegenhaltungen:
**EP-A- 0 519 746** **EP-A- 0 745 617**

- **THIYAGARAJAN, B. ET AL: "Synthesis, Structure, Dynamic Properties, and Indenyl Transfer Reactions of {AlMe2(THF)(indenyl)}2SiMe2" ORGANOMETALLICS (1998), 17(3), 281-283 CODEN: ORGND7;ISSN: 0276-7333, XP002081911**
- **COLES, NICHOLAS ET AL: ".alpha.-Alkylation of.alpha.,.alpha.-disubstituted amines via.eta.2-ketimine complexes of zirconocene" SYNLETT (1992), (2), 143-5 CODEN: SYNLES;ISSN: 0936-5214, XP002081912**
- **WALSH, PATRICK J. ET AL: "Generation, dative ligand trapping, and nitrogen-nitrogen bond cleavage reactions of the first monomeric.eta.1-hydrazido zirconocene complex, (Cp2Zr:NNPh2). A zirconium mediated synthesis of indoles" J. AM. CHEM. SOC. (1991), 113(16), 6343-5 CODEN: JACSAT;ISSN: 0002-7863, XP002081913**
- **GAMBAROTTA, SANDRO ET AL: "Stepwise reduction of carbon dioxide to formaldehyde and methanol: reactions of carbon dioxide and carbon dioxide like molecules with hydridochlorobis(cyclopentadienyl)zirconiu m(IV)" J. AM. CHEM. SOC. (1985), 107(22), 6278-82 CODEN: JACSAT;ISSN: 0002-7863, XP002081914**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 990 003 B1

- FROEMBERG, WOLFGANG ET AL: "Reactions of bis(.eta.-cyclopentadienyl)zirconium hydrides with (iminoacyl)zirconocene complexes" J. ORGANOMET. CHEM. (1985), 280(3), 355-63 CODEN: JORCAI;ISSN: 0022-328X, XP002081915
- BAYE, LAWRENCE J.: "Reactions of bis(.pi.-cyclopentadienyl)titanium dichloride. II. Reactions with aryl amide anions" SYNTH. REACT. INORG. MET.-ORG. CHEM. (1975), 5(2), 95-102 CODEN: SRIMCN, XP002081916
- SINNEMA P -J ET AL: "LINKED CYCLOPENTADIENYL- AMIDO COMPLEXES OF ZIRCONIUM;LIGAND DEPENDENCE OF CATION-ANION INTERACTIONS AND ETHENE POLYMERISATION ACTIVITY" JOURNAL OF MOLECULAR CATALYSIS. A, CHEMICAL, Bd. 128, 1998, Seiten 143-153, XP000749836
- BUERGER, HANS ET AL: "Titanium-nitrogen compounds. XXI. Preparation and properties of substituted cyclopentadienyltitanium dialkylamides" J. ORGANOMET. CHEM. (1975), 101(3), 295-306 CODEN: JORCAI, XP002081917

## Beschreibung

Die vorliegende Erfindung betrifft Katalysatorsysteme für (Co-)Polymerisationsreaktionen, enthaltend neue gemischt substituierte Metallocene, die Metallocene selbst sowie die Verwendung von Metallocenamidhalogeniden zur Generierung eines erfindungsgemäßen Katalysatorsystems.

Seit der industriellen Umsetzung der Entdeckungen von Ziegler und Natta gehören Polyolefin-Kunststoffe als ein fester Bestandteil in unsere heutige Gesellschaft. Durch die geschickte Wahl von unterschiedlichen Monomeren können Materialien erzeugt werden, die sich vor allem durch ihre unterschiedlichen Eigenschaften voneinander abheben. Einen enormen Aufschwung im Hinblick auf weiter verbesserte Polymere, aber auch beim Verständnis der molekularen Abläufe der Polymerisationsreaktionen erhielt man durch die Verwendung sog. "single site" Katalysatoren. Diese Polymerisationsinitiatoren, allgemein auch Metallocene genannt, sind in Kombination mit einem Cokatalysator hochaktive "Starter" der Monomerverkettung und gewährleisten auf Grund ihres einheitlichen chemischen und strukturellen Aufbaus eine bestimmte, definierte Polymer- oder Copolymerstruktur.

Der synthetische Zugang zu diesen Katalysatoren stellt somit eine Art Schlüsselfunktion dar. Nachdem dieses Gebiet seit ca. 15 Jahren mit steigender Intensität chemisch untersucht wird, existieren in zahlreichen Publikationen und Patenten Synthesevorschriften.

Der Stand der Technik ist die Verwendung von Metallocendichloriden A für die Generierung des aktiven Katalysatorsystems, z.B. mit Methylaluminoxan (MAO). D.h. das Metallocendichlorid stellt genaugenommen nur eine Katalysatorvorstufe dar.

| | |
|---|---|
| $L_2MCl_2$ | $L_2MX_2$ |
| (A) | (B) |

Die entsprechenden Metallocendiamide B (X = $NMe_2$) sind demgegenüber in der (Co)-Polymerisation bisher nicht mit Erfolg verwendet worden. In beiden Formeln A und B bedeutet L Metallocenligand.

Auch wenn mit der Verwendung des Metallocendichlorids A bereits eine Möglichkeit gegeben war, ein aktives Katalysatorsystem zu erzeugen, bestand jedoch nach wie vor ein Bedürfnis an verbesserten Katalysatoren, welche höhere Aktivität oder sonstige Vorteile gegenüber den bisher bekannten Katalysatoren aufweisen.

Gelöst wird diese Aufgabe erfindungsgemäß durch die Bereitstellung eines Katalysatorsystems für (Co-)Polymerisationsreaktionen, enthaltend ein Metallocenamidhalogenid der Formel (I)

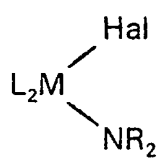

in welcher

L einen Metallocenliganden,
Hal ein Halogen aus der Gruppe F, Cl, Br und J,
M ein Metall aus der Gruppe III, IV oder V des Periodensystems oder der Lanthaniden und
R gleiche oder unterschiedliche geradkettige oder verzweigte, gesättigte oder ungesättigte Kohlenwasserstoffreste mit bis zu 8 C-Atomen, darstellen,

wobei die Amidogruppe $NR_2$ auch einen Heterocyclus mit bis zu 8 C-Atomen bilden kann, gegebenenfalls unter Einschluß weiterer Heteroatome, sowie einen Cokatalysator.

Im Rahmen der vorliegenden Erfindung wurde überraschenderweise festgestellt, daß die (Co)-Polymerisationsergebnisse drastisch verbessert werden können, wenn man Metallocenamidhalogenide der Formel in einem Katalysatorsystem verwendet. Diese zeigen verglichen mit den Metallocendichloriden nach der Aktivierung durch z.B. MAO eine sehr viel höhere Aktivität auch bei geringen MAO-Mengen.

In besonders bevorzugten Ausführungsformen der Erfindung weisen die im erfindungsgemäßen Katalysatorsystementhaltenen Metallocenamidchloride der Formel I als Metalle Titan, Zirkonium oder Hafnium auf.

Besonders bevorzugte Metallocenamidhalogenide der Formel I weisen als Halogenatom ein Chloratom auf.

Der Rest $-NR_2$ in Formel I bedeutet eine kovalent an das Metallatom gebundene Amido-Gruppierung. Aminverbindungen, die dativ nur über das freie Elektronenpaar an das Metallzentralatom gebunden sind, gelten nicht als Amidogruppierungen im Sinne der vorliegenden Erfindung.

Als Metallocenliganden L können die erfindungsgemäßen Metallocenamidchloride alle zu diesem Zweck bekannten oder geeigneten verknüpften oder unverknüpften $\pi$-Systeme enthalten. Geeignete Systeme sind dem Fachmann bekannt. Als beispielhaft und auch vorteilhaft können gegebenenfalls substituierte Cyclopentadienyl (Cp)-, Indenyl (Ind)- und Fluorenyl (Flu)-Reste genannt werden. Es können hierbei 2 einzelne, gleiche oder verschiedene Liganden ebenso vorhanden sein wie ein bivalent mit M verknüpfter Ligand, enthaltend zwei $\pi$-Systeme, oder ein über einen weiteren Rest mit M verknüpfter Metallocenligand mit einem $\pi$-System. $L_2$ bedeutet daher erfindungsgemäß nicht unbedingt, dass 2 separate Liganden vorhanden sein müssen, sondern vielmehr auch die Möglichkeit, dass 2 Valenzen von M durch einen bivalenten Liganden L besetzt sind. Derartige bivalente Liganden können beispielsweise zwei gleiche oder verschiedene $\pi$-Systeme, wie z.B. gegebenenfalls subsitutiertes Cp, Ind oder Flu, enthalten, die miteinander verbrückt sind und jeweils an das Metallatom binden. Es ist aber ebenfalls möglich, dass nur ein $\pi$-Ligandensystem vorhanden ist, an welches wiederum Rest R* gebunden ist, der die zweite Bindung an das Metallatom vermittelt. Der Rest R* kann alle Bedeutungen haben, wie sie später für die erfindungsgemäßen Metallocenamidhalogenide beschriebensind. Geeignete Metallocenliganden sind dem Fachmann bekannt und können bspw. aus den Literaturstellen EP 0 495 099 und PCT/WO90/07526 entnommen werden. Im Rahmen der vorliegenden Erfindung besonders bevorzugte Liganden sind beispielsweise die Dimethylsilyl(tetramethylcyclopentadienyl)tert.-butylamido-Gruppierung sowie die Gruppierung $(CH_3)_2Si(Ind)_2$- oder jeweils noch anders am $\pi$-Liganden substituierte Gruppierungen.

Im Rahmen der vorliegenden Erfindung ist es vorteilhaft, zusammen mit dem Metallocenamidhalogenid der Formel I im erfindungsgemäßen Katalysatorsystem als Cokatalysatoren Aluminiumalkyle oder Borcokatalysatoren einzusetzen, besonders bevorzugt das Methylaluminoxan MAO.

Prinzipiell können die Verbindungen der Formel I auch als Mischungen oder als Mischungen mitanderen Metallocenen, Halbsandwichverbindungen oder klassischen Ziegler-Natta-Katalysatoren im erfindungsgemäßen Katalysatorsystem vorhanden sein. Als Cokatalysator ist desweiteren jede Verbindung geeignet, die das Metallocenamidhalogenid der Formel I in ein Kation überführen und dieses stabilisieren kann.

Die erfindungsgemäßen Katalysatorsysteme zeichnen sich durch eine außerordentlich hohe Aktivität aus und es wird eine deutliche geringere Cokatalysatormenge benötigt, insbesondere bei der Verwendung von MAO, bezogen auf bisher bekannte Katalysatoren und Katalysatorsysteme, insbesondere die Metallocendichloride oder -diamide.

Ein weiterer Gegenstand der vorliegenden Erfindung sind Metallocenamidhalogenide der Formel I

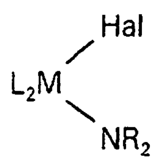

in welcher

L einen Metallocenliganden, ausgenommen unsubstituiertes oder zweifach Alkyl-substituiertes, nicht-verbrücktes Cyclopentadienyl,

Hal ein Halogen aus der Gruppe F, Cl, Br und J,

M ein Metall aus der Gruppe III, IV oder V des Periodensystems oder der Lanthaniden und

R gleiche oder unterschiedliche geradkettige oder verzweigte, gesättigte oder ungesättigte Kohlenwasserstoffreste mit bis zu 8 C-Atomen, darstellen,

wobei die Amidogruppe $NR_2$ auch einen Heterocyclus mit bis zu 8 C-Atomen bilden kann, gegebenenfalls unter Einschluß weiterer Heteroatome.

Die Gruppe $-NR_2$ bedeutet eine kovalent an das Metallatom gebundene Amido-Gruppierung. Aminverbindungen, die dativ nur über das freie Elektronenpaar an das Metallzentralatom gebunden sind, gelten nicht als Amidogruppierungen im Sinne der vorliegenden Erfindung.

Die erfindungsgemäßen Metallocenamidhalogenide sind besonders vorteilhaft als Komponenten in erfindungsgemäßen Katalysatorsystemen einsetzbar. Im Rahmen der vorliegenden Erfindung können beide Substituenten

L am Metall auch gemeinsam einen bivalenten verbrückten Liganden darstellen.

Ein derartiger bivalenter verbrückter Ligand kann beispielsweise über zwei π-Ligandensysteme an das Metall gebunden sein, also z.B. zwei Cyclopentadienyl- oder Indenyl-Einheiten, gegebenenfalls in substituierter Form, enthalten, die miteinander verbunden sind und jeweils an das Metallatom koordiniert sind. Eine andere Möglichkeit ist, daß nur ein π-Ligandensystem vorhanden ist, an welches wiederum ein Rest R* gebunden ist, der die zweite Bindung an das Metallatom vermittelt. Der Rest R* kann dabei eine beliebige Verbrückung zum Metall sein, wobei es wiederum im Rahmen der Erfindung bevorzugt ist, daß R* eine Kohlenwasserstoffkette mit bis zu 5, vorzugsweise bis zu 3 Atomen in der Kette ist, die gegebenenfalls noch zusätzlich substituiert sein kann und gegebenenfalls Heteroatome enthalten kann.

Besonders bevorzugt wird der Rest R * über eine Amidogruppe an das Metall gebunden. In einer weiteren besonders bevorzugten Ausführungsform enthält R* eine Silylgruppe, und insbesondere eine Dimethylsilylgruppe.

Für die erfindungsgemäßen Metallocenamidhalogenide und die Metallocenliganden L gilt prinzipiell genauso wie für das diese Verbindungen enthaltende erfindungsgemäße Katalysatorsystem, daß hier alle bereits bekannten oder später als geeignet aufgefundenen Metallocenliganden einsetzbar sind. Im Rahmen der vorliegenden Erfindung ist es allerdings besonders bevorzugt, wenn beide Metallocenliganden in Form eines verbrückten bivalenten Liganden vorliegen. Auch derartige verbrückte Ligandensysteme sind in den oben bereits genannten Literaturstellen beschrieben.

Für den Fall, daß zwei unverbrückte π-Systeme am Metallatom gebunden sind, ist es bevorzugt, daß diese Liganden unsymmetrisch substituiert sind mit Alkyl- oder gegebenenfalls Alkyl-substituierten Arylgruppen. Besonders bevorzugt ist hierbei substituiertes Cp, besonders bevorzugt n-Butyl-Cp oder in 1,2- oder 1,3-Stellung mit Butyl- und Methyl-substituiertes Cp. Indenylreste sind bevorzugt mit einem aromatischen Rest substituiert, der gegebenenfalls selbst wiederum ein oder mehrere Alkylgruppen tragen kann.

Im Rahmen der vorliegenden Erfindung ist es bevorzugt, daß das Metallocenamidhalogenid als Metall Titan, Zirkonium oder Hafnium enthält. Das bevorzugte Halogen ist im Rahmen der vorliegenden Erfindung Chlor, obwohl auch die Brom-Verbindungen gut geeignet sind.

Die erfindungsgemäßen Metallocenamidhalogenide der Formel I können durch Umsetzung der Dihalogenide mit einem Moläquivalent Alkaliamid (z.B. Lithiumamid) synthetisiert werden:

$$L_2MHal_2 + M'NR_2 \rightarrow L_2MHal(NR_2) + M'Hal$$

(A) (I)

Dieser Schritt ist mit guten Ausbeuten durchführbar, bedarf aber als Startverbindungen der Metallocendihalogenide, die ihrerseits oft nur in Ausbeuten von 15 bis 20 % zugänglich sind.

$$2\ LM' + MHal_4 \rightarrow L_2MHal_2 + 2\ M'Hal$$

Neben diesen geringen Ausbeuten weist die Herstellung der Metallocendihalogenide noch einige andere unangenehme Verfahrensschritte und Nachteile auf: So muss die Reaktion oft bei sehr tiefer Temperatur durchgeführt werden, was im technischen Maßstab nachteilig ist. Ein weiteres Problem ist die Reinigung, denn im letzten Syntheseschritt entsteht neben dem Produkt auch die Hauptabfallmenge (M'Hal). Somit kann erst nach der Extraktion des Produktes aus dem Abfall die eigentliche Reinigung, d.h. die Trennung von rac- und meso-Form, erfolgen.

Nach dem Stand der Technik kann man die Dichlorverbindung A auch aus der Diaminoverbindung B darstellen, z.B. durch Umsetzen von B mit Halogensilan:

$$L_2M(NR_2)_2 + 2\ ClSiMe_3 \rightarrow L_2MCl_2 + 2\ Me_3SiNR_2$$

(B) (A)

Nachteilig hierbei allerdings ist, daß B, soweit es nicht besser aus A hergestellt wird, tatsächlich nur im Fall sterisch wenig belasteter Liganden L aus diesen und einem homoleptischen Übergangsmetall-amid unter Abspaltung von Amin hergestellt werden kann (Jordan, US-PS 5,597,935)

$$2\ LH + M(NR_2)_4 \xrightarrow{\Delta T} L_2M(NR_2)_2 + 2\ HNR_2$$

(B)

Als weitere Herstellungsmöglichkeit dient ein Verfahren zur Herstellung von Verbindungen der allgemeinen Formel (II)

$$L_xMHal_y(NR_2)_{z-y} \qquad (II)$$

in welcher

L einen Metallocenliganden,
Hal ein Halogenatom aus der Gruppe F, Cl, Br und J,
M ein Metall aus einer der Gruppen III, IV oder V des Periodensystems oder der Lanthaniden und
R gleiche oder unterschiedliche geradkettige oder verzweigte, gesättigte oder ungesättigte Kohlenwasserstoffreste mit bis zu 8 C-Atomen darstellen,

wobei die Gruppe $NR_2$ einen Heterocyclus mit bis zu 8 C-Atomen, gegebenenfalls unter Einschluß weiterer Heteroatome, darstellen kann, und für x
= 1 gilt, daß y 1, 2 oder 3 und z 3 ist, und für x = 2 gilt, daß y 1 oder 2 und z 2 ist,
durch Umsetzung eines Metallocenliganden LH mit einer Verbindung der Formel (III)

$$Hal_wM(NR_2)_{4-w} \qquad (III)$$

bei der M und R die oben aufgeführten Bedeutungen haben und w eine ganze Zahl von 1 bis 3 darstellt.
Gemischte (heteroteptische) Metallamidhalogenide (III) lassen sich mit Liganden LH direkt zu gemischten Metallocenamidhalogeniden der Formel I oder auch zu Metallocendihalogeniden A umsetzen. Erstaunlicherweise kommt es dabei nicht durch das freigesetzte Amin zu einem Halogen-Amidaustausch am Metallocen-Zentrum.
L, M und Hal haben auch in diesem Verfahren die bereits oben für die Verbindungen der Formel I angegebenen Bedeutungen.
Je nach Zusammensetzung der Übergangsmetallstartverbindung der Formel III können bereits am Anfang der Synthese die Endprodukte festgelegt werden. So kann folgende Reaktion stattfinden:

$$2\ LH + Hal_wM(NR_2)_{4-w} \rightarrow L_2MHal_y(NR_2)_{2-y} + 2\ HNR_2$$

wobei w gleich y ist und 1 oder 2 bedeutet.
(2 LH können im vorliegenden Fall auch HL-LH bedeuten, und es ergibt sich dann eine Verbindung mit einem divalenten, verbrückten Liganden.)
Man hatdie Wahlmöglichkeit, ob man die herkömmlichen Metallocendichloride mit y = 2 oder die neuen erfindungsgemäßen Metallocenamidchloride mit y = 1 herstellt. In jedem Fall gilt, daß im letzten und entscheidenden Verfahrensschritt keine Salzfracht als Nebenprodukt entsteht. Eine aufwendige Produktextraktion entfällt deswegen, und man kann sofort die rac-meso-Trennung durchführen. Zusätzlich wird ein weiterer Nachteil der klassischen Route, nämlich die Tieftemperatur-Reaktionsbedingungen vermieden. Die Synthese wird stattdessen bei erhöhter Temperatur (> 100°C und vorzugsweise ca. 160 - 170°C), welche technisch leichter realisiert werden kann, durchgeführt.

Ein wichtiger Vorteil dieses Synthesewegs besteht darin, daß es keine Einschränkungen gibt bezüglich des organischen Restes am Metallocenliganden. Alle bisher bekannten verknüpften π-Systeme ((ggf. substituiertes) Cp; (ggf. substituierte) Ind- und Flu-Systeme) können mittels dieser Reaktion in den späteren Katalysator eingebaut werden. Vor allem aber gibt es auch keine Probleme mit Substituenten in der 2-Position am Indengerüst.

Gerade diese Substituenten sind aber von besonderer Bedeutung, denn die zugehörigen Katalysatoren gehören zu den bevorzugtesten ihrer Art, denn die damit hergestellten Polymere zeichnen sich durch hohe Molmassen aus.

Die neu gefundene Synthese ist nicht auf zwei unverbrückte oder einen divalenten, verbrückten Liganden beschränkt, sondern kann ganz allgemein zur Einführung von organischen Liganden mit schwach aciden Protonen in Übergangsmetallkomplexe angesehen werden.

Somit eröffnet sich auch die Möglichkeit, Metallkomplexe mit nur einem π-Liganden herzustellen (z.B. $Cp^*MHal_3$), welche ebenfalls auf dem Gebiet der Polymerisation verwendet werden. Dazu kann eine Startverbindung mit der Zusammensetzung Monoamidohalogenmetall-Substanz mit dem entsprechenden Liganden zur Reaktion gebracht werden.

$$LH + Hal_wM(NR_2)_{4-w} \rightarrow LMHal_y(NR_2)_{3-y} + HNR_2$$

wobei w = y = 1, 2 oder 3 bedeutet.

Die Reaktionsbedingungen und die Vorteile sind die gleichen wie oben bereits für diese Verfahrensweise dargelegt.

Bei dem Verfahren können als Metallocenliganden die gegebenenfalls substituierten Cyclopentadienyl-, Indenyl- oder Fluorenyl-Verbindungen eingesetzt werden. Diese Liganden können dann, wie oben bereits ausgeführt, als zwei einzelne, gleiche oder verschiedene Liganden ebenso eingesetzt werden wie als verbrückte Liganden oder als ein Ligand, der über einen weiteren Rest R* bzw. ein Heteroatom zwei Valenzen des Metallatoms absättigt. Als Metall wird vorteilhaft Titan, Zirkonium oder Hafnium eingesetzt.

Ein neues erfindungsgemäßes Metallocenamidhalogenid und insbesondere ein Metallocenamidchlorid kann, wie oben erwähnt, ebenfalls gemäß dem oben beschriebenen Verfahren hergestellt werden.

Ein weiterer Gegenstand der vorliegenden Erfindung ist die Verwendung der erfindungsgemäßen Metallocenamidhalogenide der Formel zur Generierung eines aktiven Katalysatorsystems für (Co-)Polymerisationsreaktionen. Es ist dabei besonders vorteilhaft, zusammen mit dem Metallocenamidhalogenid Aluminiumalkyle oder Bor-Cokatalysatoren, besonders bevorzugtMethylaluminoxan (MAO) einzusetzen.

Die folgenden Beispiele sollen die Erfindung weiter erläutern:

Beispiel 1

Darstellung von Dichloro[dimethylsilyl(tetramethylcyclopentadienyl)tertbutylamido]titan (IV)

Unter Inertgasatmosphäre werden 283 mg (1,368 mmol) Dichloro-bis(dimethylamido)titan (IV) eingewogen und in 15 ml Mesitylen gelöst. Diese Lösung wird bei Raumtemperatur mit 344 mg (1,368 mmol) (Tetramethylcyclopentadienyldimethylsilyl)tert-butylamin versetzt. Die Lösung wird sodann 1 1/4 Stunden unter Rückfluß erhitzt (165°C). Das Lösungsmittel wird unter reduziertem Druck abdestilliert und der Rückstand mit Hexan extrahiert. Durch anschließende Kristallisation kann das Produkt in kristalliner Form isoliert werden.

Charakterisierung:

$^1$H-NMR (400 MHz, $CDCl_3$, 25°C):
δ[ppm] = 0.69 ($(CH_3)_2Si$, 6H), 1.42 (tertbutyl, 9H), 2.12 ($CH_3$, 6H), 2.22 ($CH_3$, 6H).

$^{13}$-NMR (100 MHz, $CDCl_3$, 25°C):
δ[ppm] = 5.5, 13.1, 17.3, 32.6, 62.3, 126.9, 138.1, 140.9.

Beispiel 2

Darstellung von (Chloro)(dimethylamido)[dimethylsilyl(tetramethylcyclopentadienyl)tert-butylamido)titan(IV)

Unter Inertgasatmosphäre werden 190 mg (0,516 mmol) Dichloro[dimethylsilyl(tetramethylcyclopentadienyl) tert- butylamidoltitan und 26 mg (0,510 mmol) Lithiumdimethylamid eingewogen und bei Raumtemperatur in 20 ml Hexan gelöst. Der Ansatz wird 30 min bei Raumtemperatur gerührt und 1,5 h unter Rückfluß erhitzt. Nach Filtration

der Lösung wird das Lösungsmittel teilweise unter reduziertem Druck abdestilliert und bei -30°C kristallisiert. Das Produkt fällt als rot kristalliner Feststoff an.

Charakterisierung:

$^{1}H$ NMR (40 MHz, $CDCl_3$, 25°C):
δ[ppm] = 0.50 ($(CH_3)_2Si$, 3H), 0.56 ($(CH_3)_2Si$, 3H), 1.39 (tertbutyl, 9H), 1.63 ($CH_3$, 3H), 1.94 ($CH_3$, 3H), 2.12 ($CH_3$, 6H), 2.80 ($N(CH_3)_2$, 6H).

Beispiel 3

Darstellung von Chlorobis(dimethylamido)[dimethylsilyl(tetramethylcyclopentadienyl)tert-butylamin]titan(IV)

Unter Inertgasatmosphäre werden 408 mg (1,893 mmol) Chlorotris(dimethylamido)titan(IV) eingewogen und in 20 ml Mesitylen gelöst. Diese Lösung wird bei Raumtemperatur mit 476 mg (1,893 mmol) (Tetramethylcyclopentadienyldimethylsilyl)tert-butylamin versetzt. Die Lösung wurde sodann 1 1/4 Stunden unter Rückfluß erhitzt (111°C). Die Lösung wird durch Filtration von Feststoffbeimengungen befreit und das Lösungsmittel unter reduziertem Druck abdestilliert. Das Produkt fällt nahezu rein an.

Charakterisierung:

$^{1}H$-NMR (400 MHz, $CDCl_3$, 25°C):
δ[ppm] = 0.09 ($(CH_3)_2Si$, 6H), 1.08 (tertbutyl, 9H), 1.83 ($CH_3$, 6H), 2.00 ($CH_3$, 6H), 3.03 ($N(CH_3)_2$, 12H).

Beispiel 4

Darstellung von Trichloro(pentamethylcyclopentadienyl)titan(IV)

Unter Inertgasatmosphäre werden 210 mg (1,059 mmol) Trichlorodimethylamidotitan(IV) eingewogen und in 15 ml Mesitylen gelöst. Diese Lösung wird auf -50°C abgekühlt und 145 mg (1,059 mmol) Pentamethylcyclopentadien zugespritzt. Die Lösung wird sodann 1 1/2 Stunden unter Rückfluß erhitzt (165°C). Nach destillativer Entfernung des Lösungsmittels unter reduziertem Druck wird der Rückstand mit Hexan extrahiert. Nach anschließender Entfernung des Lösungsmittels des Extraktes kann das Produkt isoliert werden.

Charakterisierung:

$^{1}H$-NMR (400 MHz, $CDCl_3$, 25°C):
δ[ppm] = 1.89 ($C_5(CH_3)_5$).
$^{13}C$-NMR (100 MHz, $CDCl_3$, 25°C):
δ[ppm] = 14.0 ($C_5(CH_3)_5$), 137.27 ($C_5(CH_3)_5$).

Beispiel 5

Darstellung von rac-Chloro[$\eta^5$:$\eta^5$-bis(1-indenyl)dimethylsilyl](dimethylamido)zirkonium

Unter Inertgasatmosphäre werden $ZrCl[N(CH_3)_2]_3$ (184 mg, 0.711 mmol) und $(CH_3)_2Si(IndH)_2$ (205 mg, 0.711 mmol) in 20 ml Mesitylen bei Raumtemperatur gelöst. Diese Lösung wird im Ölbad bis zum Siedepunkt des Lösungsmittels erwärmt und 2,5 h unter Rückfluß gekocht. Die Heizung des Ölbades wird ausgeschaltet und das Lösungsmittel des Reaktionsansatzes aus dieser heißen Lösung unter reduziertem Druck von $8*10^{-4}$ Pa destillativ entfernt. Die Temperatur des Ölbades erniedrigt sich durch das Entfernen des Lösungsmittels, wobei die Temperatur durch ein Heißwasserbad ebenfalls erhöht werden kann. Der Rückstand wird mit 30 ml Toluol extrahiert und das Extrakt bis zum Trübpunkt bei Raumtemperatur eingeengt. Die Lösung wird nun langsam auf -30°C abgekühlt und rac-$(CH_3)_2Si(Ind)_2ZrCl[N(CH_3)_2]$ als roter kristalliner Feststoff isoliert.

Charakterisierung:

$^{1}H$-NMR (400 MHz, $C_6D_6$, 25°C):
δ[ppm] = 0.82, 0,94 ($(CH_3)_2Si$, 6H), 2.51 ($N(CH_3)_2$, 6H), 6.04- 7.68 (12H).

$^{13}C$-NMR (100 MHz, $C_6D_6$, 25°C):
δ[ppm] = - 2.30, - 1.15 ($(CH_3)_2Si$), 48.21 ($N(CH_3)_2$), 111 - 135 (aromat. C)).

Beispiel 6

Darstellung von rac-Chloro[$\eta^5$:$\eta^5$-bis(1-indenyl)dimethylsilyl](dimethylamido)hafnium

Unter Inertgasatmosphäre werden $HfCl[N(CH_3)_2]_3$ (312 mg, 0.901 mmol) und $(CH_3)_2Si(IndH)_2$ (260 mg, 0.901 mmol) in 25 ml Mesitylen bei Raumtemperatur gelöst. Diese Lösung wird im Ölbad bis zum Siedepunkt des Lösungsmittels erwärmt und 2,5 h unter Rückfluß gekocht. Die Heizung des Ölbades wird ausgeschaltet und das Lösungsmittel des Reaktionsansatzes aus dieser heißen Lösung unter reduziertem Druck von $8*10^{-4}$ Pa destillativ entfernt. Die Temperatur des Ölbades erniedrigt sich durch das Entfernen des Lösungsmittels, wobei die Temperatur durch ein Heißwasserbad ebenfalls erhöht werden kann. Der Rückstand wird mit Toluol extrahiert und mehreren Kristallisationen unterzogen, bis das Produkt als roter kristalliner Feststoff isoliert werden kann.

Charakterisierung:

$^1H$-NMR (400 MHz, $C_6D_6$, 25°C):
δ[ppm] = 0.69, 0.73 ($(CH_3)_2Si$, 6H), 2.52 ($N(CH_3)_2$, 6H), 5.89 - 7.54(12H).
$^{13}C$-NMR (100 MHz, $C_6D_6$, 25°C):
δ[ppm] = - 2.29, - 1.12 ($(CH_3)_2Si$), 47.82 ($N(CH_3)_2$), 110 - 135 (aromat. C)).

Beispiel 7

Darstellung von rac-Chloro[$\eta^5$:$\eta^5$-bis(2-methylinden-1-yl)dimethylsilyl](dimethylamido)zirkonium

Unter Inertgasatmosphäre werden $ZrCl[N(CH_3)_2]_3$ (425 mg, 1.642 mmol) und $(CH_3)_2Si(2\text{-}Me\text{-}IndH)_2$ (520 mg, 1.642 mmol) in 20 ml Mesitylen bei Raumtemperatur gelöst. Diese Lösung wird im Ölbad bis zum Siedepunkt des Lösungsmittels erwärmt und 3 h unter Rückfluß gekocht. Die Heizung des Ölbades wird ausgeschaltet und das Lösungsmittel des Reaktionsansatzes aus dieser heißen Lösung unter reduziertem Druck von $8*10^{-4}$ Pa destillativ entfernt. Die Temperatur des Ölbades erniedrigt sich durch das Entfernen des Lösungsmittels, wobei die Temperatur durch ein Heißwasserbad ebenfalls erhöht werden kann. Der Rückstand wird mit Toluol extrahiert und mehreren Kristallisationen unterzogen, bis das Produkt als roter kristalliner Feststoff isoliert werden kann.

Charakterisierung:

$^1$NMR (400 MHz, $C_6D_6$, 25°C:
δ[ppm] = 0.80, 0.88 ($(CH_3)_2Si$, 6H), 2.25, 2.27 ($(CH_3)Ind$, 6H), 2.60 ($N(CH_3)_2$, 6H), 6.50 - 7.71 (12H).
$^{13}C$-NMR (100 MHz, $C_6D_6$, 25°C):
δ[ppm] = 2.10, 2.44 ($(CH_3)_2Si$), 17.38, 18.16 ($(CH_3)Ind$) 49.40 ($N(CH_3)_2$), 115 - 135 (aromat. C)).

Beispiel 8

Darstellung von rac-Bromo[$\eta^5$:$\eta^5$-bis(1-indenyl)dimethylsilyl](dimethylamido)zirkonium

Unter Inertgas werden 198 mg (0,653 mmol) $ZrBr[NMe_2]_3$ und 188 mg (0,652 mmol) $Me_2Si(IndH)_2$ in 10 ml Toluol gelöst und anschließend das Lösungsmittel wieder abdestilliert. Der zurückbleibende Feststoff wird auf 110°C erhitzt, wobei eine Schmelze entsteht. Nach 30 min wird die Schmelze auf Raumtemperatur abgekühlt. Die rote Substanz wird in 5 ml Toluol aufgenommen und von unlöslichen Feststoffanteilen durch Filtration getrennt. Nach mehrmaligem Kristallisieren bei -30°C aus Toluol und Hexan kann der gewünschte Komplex isoliert werden.
$^1H$-NMR (400 MHz, $C_6D_6$, 25°C):
[ppm]δ = 0,58 (s, 3H, $Si(C\underline{H}_3)_2$), 0,72 (s, 3H, $Si(C\underline{H}_3)_2$, 2,46 (s, 6H, $N(C\underline{H}_3)_2$), 5,91 (d, 1H, $^3J$ (H,H) = 3,08 Hz, 5-Ring), 5,98 (d, 1H, $^3J$(H,H) = 3,28 Hz, 5-Ring), 6,59 (dd, 1H, $^3J$(H,H) = 7,44 Hz, $^3J$(H,H) = 7,69 Hz, 6-Ring), 6,73 (d, 1H, $^3J$ (H,H) = 3,24 Hz, 5-Ring), 6,85 ("dd", 1H, $^3J$(H,H) = 7,53 Hz, $^3J$(H,H) = 7,60 Hz, 6-Ring), 6,93 ("dd", 1H, $^3J$(H,H) = 7,53 Hz, 6-Ring), 6,96 ("dd", 1H, $^3J$(H,H) = 8,80 Hz, 6-Ring), 7,04 ("dd", 1H, $^3J$(H,H) = 7,75 Hz, $^3J$(H,H) = 7,90 Hz, 6-Ring), 7,18 ("t", 1H, $^3J$(H,H) = 9,02 Hz, 6-Ring), 7,32 (dd, 1H, $^3J$(H,H) = 9,07 Hz, $^3J$(H,H) = 8,65 Hz, 6-Ring), 7,44 (dd, 1H, $^3J$ (H,H) = 7,06 Hz, $^3J$(H,H) = 8,43 Hz, 6-Ring), 7,49 (d, 1H, $^3J$(H,H) = 8,58 Hz, 6-Ring).

Beispiel 9

Darstellung von rac-[η^5:η^5-Bis(1-indenyl)-dimethylsilyl](iodo)(dimethylamido)zirkonium

Unter Inertgas werden 347 mg (0,990 mmol) $ZrI[NMe_2]_3$ und 286 mg (0,990 mmol) $Me_2Si(IndH)_2$ in 10 ml Toluol gelöst und anschließend das Lösungsmittel wieder abdestilliert. Der zurückbleibende Feststoff wird auf 110°C erhitzt, wobei eine Schmelze entsteht, welche 30 min unter vermindertem Druck gehalten wird. Nach 30 min wird die Schmelze auf Raumtemperatur abgekühlt. Die rote Substanz wird in 5 ml Toluol aufgenommen von unlöslichen Feststoffanteilen durch Filtration getrennt. Nach mehrmaligem Kristallisieren bei -30°C aus Toluol und Hexan kann der gewünschte Komplex isoliert werden.
$^1$H-NMR (400 MHz, $C_6D_6$, 25°C):
[ppm]δ = 0,53 (s, 3H, $Si(CH_3)_2$), 0,70 (s, 3H, $Si(CH_3)_2$), 2,42 (s, 6H, $N(CH_3)_2$), 5,83 (d, 1H, $^3J$(H,H) = 3,02 Hz, 5-Ring), 6,00 (d, 1H, $^3J$(H,H) = 3,27 Hz, 5-Ring), 6,57 (dd, 1H, $^3J$(H,H) = 7,34 Hz, $^3J$(H,H) = 7,60 Hz, 6-Ring), 6,65 (d, 1H, $^3J$(H,H) = 3,09 Hz, 5-Ring), 6,86 (m, 2H, 6-Ring), 7,16 (m, 1H, 6-Ring), 7,26 (d, 1H, $^3J$(H,H) = 9,12 Hz, 6 Ring), 7,28 (d, 1H, $^3J$(H,H) = 8,55 Hz, 6-Ring), 7,49 (m, 3H, 6-Ring).

Beispiel 10

Darstellung von rac-Chloro[η^5:η^5-2,2-bis(1-indenyl)propandiyl](dimethylamido)zirkonium

Unter Schutzgas werden 174 mg (0,672 mmol) $ZrCl[N(CH_3)_2]_3$ und 183 mg (0,672 mmol) 2,2-Bis(indenyl) propan eingewogen und in 10 ml Mesitylen gelöst. Die Reaktionslösung wird unter Rückfluß 2 h auf 165°C erhitzt, wobei sich die Farbe nach dunkel rot verändert. Das Lösungsmittel wird unter vermindertem Druck abdestilliert und durch Toluol ersetzt. Nach einer Filtration wird das Reaktionsgemisch zur Kristallisation eingeengt und auf -30°C abgekühlt. Das Produkt kann als roter kristalliner Feststoff isoliert werden.
$^1$H-NMR (400 MHz, $d^8$-thf, 25°C):
[ppm]δ = 2,22 (s, 3H, $C8CH_3)_2$), 2,39 (s, 3H, $C(CH_3)_2$), 2,44 (s, 6H, $N(CH_3)_2$), 6,14 (d, 1H, $^3J$(H,H) = 3,51 Hz, 5-Ring), 6,54 (d, 1H, $^3J$(H,H) = 3,51 Hz, 5-Ring), 6,59 ("d", 2H, $^3J$(H,H) = 3,51 Hz, 5-Ring), 6,75 (dd, 1H, $^3J$(H,H) = 6,52 Hz, 6-Ring), 6,87 (m, 1H, 6-Ring), 7,01 (m, 2H, 6-Ring), 7,30 (d, 1H, $^3J$(H,H) = 8,64 Hz, 6-Ring), 7,52 (d, 1H, $^3J$(H,H) = 8,53 Hz, 6-Ring), 8,04 (d, 1H, $^3J$(H, H) = 8,53 Hz, 6-Ring).

Beispiel 11

Darstellung von rac-Chloro[η^5:η^5-bis(2-methyl-4,5-benzinden-1-yl)dimethylsilyl](diemethylamido)zirkonium

Unter Schutzgas werden 230 mg (0,888 mmol) $ZrCl[N(CH_3)_2]_3$ und 370 mg (0,888 mmol) Bis(2-methyl-4,5-benzindenyl)dimethylsilan eingewogen und in 10 ml Mesitylen gelöst. Die Reaktionslösung wird unter Rückfluß 2 h auf 165°C erhitzt, wobei sich die Farbe nach dunkel rot verändert. Das Lösungsmittel wird unter vermindertem Druck abdestilliert und durch Toluol ersetzt. Nach einer Filtration wird das Reaktionsgemisch zur Kristallisation eingeengt und auf -30°C abgekühlt. Das Produkt kann als roter kristalliner Feststoff isoliert werden.
$^1$H-NMR (400 MHz, $C_6D_6$, 25°C):
[ppm]δ = 0,86 (s, 3H, $Si(CH_3)_2$), 0,91 (s, 3H, $Si(CH_3)_2$), 2,03 (s, 6H, $N(CH_3)_2$), 2,37 (s, 3H, 2-MeInd), 2,39 (s, 3H, 2-MeInd), 7,00 - 7,88 (m, 14H, BenzIndenyl).

Beispiel 12

Darstellung von rac-Dichloro[η^5:η^5-bis(1-indenyl)dimethyl]zirkonium

Unter Schutzgas werden 220 mg (0,763 mmol) Bis(indenyl)dimethylsilan und 301 mg (0,763 mmol) Di(chloro) bis(dimethylamido)bis(tetrahydrofurano)zirkonium eingewogen und in 20 ml Mesitylen suspendiert. Nach 2 h unter Rückfluß bei 165°C wird die Reaktionslösung auf Raumtemperatur abgekühlt und das Lösungsmittel unter vermindertem Druck abdestilliert. Der Rückstand wird in Toluol aufgenommen und von unlöslichen Bestandteilen durch Filtration befreit. Das Volumen des Lösungsmittels wird verringert und die Lösung bei -30°C kristallisiert.
$^1$H-NMR (400 MHz, $CDCl_3$, 25°C):
[ppm]δ = 1,12 (s, 6H, $Si(CH_3)_2$), 6,08 (d, 2H, 5-Ring), 6,90 (d, 2H, 5-Ring), 7,04 - 7,60 (m, 8H, aromat.)

Beispiel 13

Darstellung von rac-Dichloro[$\eta^5$:$\eta^5$-bis(2-methyl-4,5-benzinden-1-yl)dimethylsilyl]zirkonium

Unter Schutzgas werden 322 mg (0,773 mmol) Bis(2-methyl-4,5-benzindenyl)dimethylsilan und 305 mg (0,773 mmol) Di(chloro)bis(dimethylamido)bis(tetrahydrofurano)zirkonium eingewogen und in 20 ml Mesitylen und 5 ml THF gelöst. Die Reaktionslösung wird 2 h bei 165°C unter Rückfluß erhitzt und anschließend auf Raumtemperatur langsam abgekühlt. Das Lösungsmittel wird entfernt und der Rückstand in Toluol aufgenommen. Nach Filtration wird das Lösungsmittel eingeengt und das Produkt bei -30°C kristallisiert.

$^1$H-NMR (400 MHz, $CDCl_3$, 25°C):
[ppm]δ = 1,37 (s, 6H, $Si(C\underline{H}_3)_2$), 2,38 (s, 6H, 2-$\underline{Me}$Ind), 7,20 - 7,98 (m, 14H, aromat.

Beispiel 14

rac-Chloro[$\eta^5$:$\eta^5$-bis-1,2-(1-indenyl)ethandiyl](dimethylamido)zirkonium

Unter Inertgas werden 1,214 g (2,9 mmol) rac$(CH_2Ind)_2ZrCl_2$ und 0,170 g (3,3 mmol) $LiNMe_2$ in 30 ml Toluol gelöst bzw. suspendiert. Anschließend refluxiert man für 3 h. Nach dem Abkühlen wird der Ansatz filtriert, vom Filtrat destilliert man das Lösungsmittel ab. Nach dem Trocknen kann man den Komplex als rotes Pulver isolieren.

$^1$H-NMR (200 MHz, $C_6D_6$, 25°C)
[ppm]δ = 2,52 (s, 6H, $N(C\underline{H}_3)_2$), 2,83-3,45 (m, 4H, $(C\underline{H}_2)_2$), 5,59 (d, 1H, 5-Ring), 5,97 (d, 1H, 5-Ring), 6,31 (dd, 1H, 5-Ring), 6,44 (dd, 1H, 5-Ring), 6,58-7,49 (m, 8H, 6-Ring).

Beispiel 15

Chloro[$\eta^5$:$\eta^5$-bis(n-Butylcyclopentadienyl)](dimethylamido)hafnium

Unter Inertgas werden 10 g (20,33 mmol) $(nBuCp)_2HfCl_2$ und 1,04 g (20,33 mmol) $LiNMe_2$ in 100 ml Toluol gelöst bzw. suspendiert. Man refluxiert 3 h, anschließend filtriert man den Ansatz bei Raumtemperatur. Nach dem Abdestillieren des Lösungsmittels und Trocknen im Hochvakuum kann der Komplex als braunes Öl isoliert werden.

$^1$H-NMR (200 MHz, $C_6D_6$, 25°C)
[ppm]δ = 0,86 (t, 6H, $CH_2$-$C\underline{H}_3$), 1,17-1,53 (m, 8H, $C\underline{H}_2$), 2,36-2,71 (m, 4H, $C\underline{H}_2$), 2,92 (s, 6H, $N(C\underline{H}_3)_2$), 5,46-5,50 (m, 2H, 5-Ring), 5,53-5,57 (m, 2H, 5-Ring), 5,83-5,88 (m, 2H, 5-Ring), 5,91-5,94 (m, 2H, 5-Ring)

Beispiel 16

Chloro[$\eta^5$:$\eta^5$-bis(n-butylcyclopentadienyl)](dimethylamido)zirkonium

Unter Inertgas werden 14,834 g (36,67 mmol) $(nBuCp)_2ZrCl_2$ und 1,871 g (36,67 mmol) $LiNMe_2$ in 100 ml Toluol gelöst bzw. suspendiert. Man refluxiert 3 h, anschließend filtriert man den Ansatz bei Raumtemperatur. Nach dem Abdestillieren des Lösungsmittels und Trocknen im Hochvakuum kann der Komplex als braunes Öl isoliert werden.

$^1$H-NMR (200 MHz, $C_6D_6$, 25°C)
[ppm]δ = 0,86 (t, 6H, $CH_2$-$C\underline{H}_3$), 1,18-1,55 (m, 8H, $C\underline{H}_2$), 2,39-2,69 (m, 4H, $C\underline{H}_2$), 2,86 (s, 6H, $N(C\underline{H}_3)_2$), 5,49-5,52 (m, 2H, 5-Ring), 5,57-5,62 (m, 2H, 5-Ring), 5,85-5,90 (m, 2H, 5-Ring), 5,99-6,02 (m, 2H, 5-Ring)

$^{13}$C-NMR (50 MHz, $C_6D_6$, 25°C)
[ppm]δ = 14,12 ($CH_2$-$\underline{C}H_3$), 22,80/30,12/33,53 (-$\underline{C}H_2$-), 50,45 ($N(\underline{C}H_3)_2$), 107,66/110,04/111,74/114,54/131,79 (5-Ring)

Beispiel 17

Ein 0,5 l Rührreaktor wird nach dem Inertisieren bei Raumtemperatur mit 0,24 l Toluol und 5 ml 10 %igem MAO gefüllt und die Mischung auf die Polymerisationstemperatur von 40°C aufgeheizt. Die Lösung wird anschliessend mit gasförmigem Propengas mit 2 bar gesättigt.
5 mg Bis(indenyl)dimethylsilylenzirkonium(dimethyl)amidchlorid werden in 50 ml Toluol gelöst und mit 3,1 ml 10 %igem MAO versetzt. 6 ml dieser Stammlösung werden zum Start der Polymerisation in den Rührreaktor überführt. Nach einer Stunde wird die Reaktionsmischung mit salzsaurem Ethanol gequencht.
Man erhält 19,8 g isotaktisches Polypropylen mit einem Schmelzpunkt von 144°C und einer Isotaktizität von 94 %.

Beispiel 18

Ein 0,5 l Rührreaktor wird nach dem Inertisieren bei Raumtemperatur mit 0,24 l Toluol und 3 ml 25 Gew.-%igem Triisobutylaluminium gefüllt und die Mischung auf die Polymerisationstemperatur von 40°C aufgeheizt. Die Lösung wird anschließend mit gasförmigem Propengas mit 2 bar gesättigt. 5 mg Bis(indenyl)dimethylsilylenzirkonium (dimethyl)amidchlorid werden in 50 ml Toluol gelöst und mit 3,1 ml 10 %igem MAO versetzt. 4 ml dieser Stammlösung werden zum Start der Polymerisation in den Rührreaktor überführt. Nach einer Stunde wird die Reaktionsmischung mit salzsaurem Ethanol gequencht.
Man erhält 22,3 g isotaktisches Polypropylen mit einem Schmelzpunkt von 144,7°C und einer Isotaktizität von 93,5 %.

Beispiel 19

Ein 0,5 l Rührreaktor wird nach dem Inertisieren bei Raumtemperatur mit 0,24 l Toluol und 3 ml 25 Gew.-%igem Triisobutylaluminium gefüllt und die Mischung auf die Polymerisationstemperatur von 60°C aufgeheizt. Die Lösung wird anschließend mit gasförmigem Propengas mit 2 bar gesättigt. 5 mg Bis(indenyl)dimethylsilylenzirkonium (dimethyl)amidchlorid werden in 50 ml Toluol gelöst und mit 3,1 ml 10 %igem MAO versetzt. 2,5 ml dieser Stammlösung werden zum Start der Polymerisation in den Rührreaktor überführt. Nach einer Stunde wird die Reaktionsmischung mit salzsaurem Ethanol gequencht.
Man erhält 9,3 g isotaktisches Polypropylen mit einem Schmelzpunkt von 133°C und einer Isotaktizität von 90,5 %.

**Patentansprüche**

1. Katalysatorsystem für (Co-)Polymerisationsreaktionen, enthaltend ein Metallocenamidhalogenid der Formel (I)

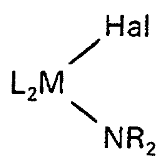

in welcher

L einen Metallocenliganden,
Hal ein Halogen aus der Gruppe F, Cl, Br und J,
M ein Metall aus der Gruppe III, IV oder V des Periodensystems oder der Lanthaniden und
R gleiche oder unterschiedliche geradkettige oder verzweigte, gesättigte oder ungesättigte Kohlenwasserstoffreste mit bis zu 8 C-Atomen, darstellen, wobei die Amidogruppe $NR_2$ auch einen Heterocyclus mit bis zu 8 C-Atomen bilden kann, gegebenenfalls unter Einschluß weiterer Heteroatome,

sowie einen Cokatalysator.

2. Katalysatorsystem nach Anspruch 1,
**dadurch gekennzeichnet,**
**daß** das Metall Titan, Zirkonium oder Hafnium ist.

3. Katalysatorsystem nach Anspruch 1 oder 2,
**dadurch gekennzeichnet,**
**dass** Hal Chlor bedeutet.

4. Katalysatorsystem nach Anspruch 1, 2 oder 3,
**dadurch gekennzeichnet,**
**daß** der Metallocenligand ausgewählt ist aus jeweils gegebenenfalls substituierten Cyclopentadienyl-, Indenyl- oder Fluorenylgruppierungen.

5. Katalysatorsystem nach einem der vorhergehenden Ansprüche,

**dadurch gekennzeichnet,**
**daß** es als Cokatalysator ein Alkylaluminoxan oder einen Borcokatalysator enthält.

6. Katalysatorsystem nach Anspruch 5,
**dadurch gekennzeichnet,**
**daß** es MAO enthält.

7. Metallocenamidhalogenid der Formel (I)

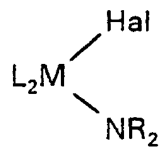

in welcher

L einen Metallocenliganden, ausgenommen unsubstituiertes oder zweifach Alkyl-substituiertes, nicht-verbrücktes Cyclopentadienyl,
Hal ein Halogen aus der Gruppe F, Cl, Br und J,
M ein Metall aus der Gruppe III, IV oder V des Periodensystems oder der Lanthaniden und
R gleiche oder unterschiedliche geradkettige oder verzweigte, gesättigte oder ungesättigte Kohlenwasserstoffreste mit bis zu 8 C-Atomen, wobei die Amidogruppe $NR_2$ auch einen Heterocyclus mit bis zu 8 C-Atomen, gegebenenfalls unter Einschluß weiterer Heteroatome, bilden kann, darstellen.

8. Metallocenamidhalogenid nach Anspruch 7,
**dadurch gekennzeichnet,**
**daß** beide Substituenten L am Metall gemeinsam einen bivalenten verbrückten Liganden darstellen.

9. Metallocenamidhalogenid nach Anspruch 8,
**dadurch gekennzeichnet,**
**daß** der bivalente verbrückte Ligand über zwei π-Liganden an das Metall gebunden ist.

10. Metallocenamidhalogenid nach Anspruch 8,
**dadurch gekennzeichnet,**
**daß** der divalente verbrückte Ligand über einen π-Liganden und einen daran gebundenen Rest R* an das Metall gebunden ist, wobei der Rest R* eine gegebenenfalls Heteroatome enthaltende Kohlenwasserstoffkette bis zu 5 Atomen Kettenlänge ist.

11. Metallocenamidhalogenid nach Anspruch 10,
**dadurch gekennzeichnet,**
**daß** der Rest R* eine Amidogruppe enthält, über welche er an das Metall gebunden ist.

12. Metallocenamidhalogenid nach Anspruch 10 oder 11,
**dadurch gekennzeichnet,**
**daß** R* eine Silylgruppe und insbesondere eine Dimethylsilylgruppe enthält.

13. Metallocenamidhalogenid nach einem der Ansprüche 7 bis 12,
**dadurch gekennzeichnet,**
**daß** das Metall Titan, Zirkonium oder Hafnium ist.

14. Metallocenamidhalogenid nach einem der Ansprüche 7 bis 13,
**dadurch gekennzeichnet,**
**dass** Hal Chlor bedeutet.

15. Metallocenamidhalogenid nach einem der Ansprüche 7 bis 14,

**dadurch gekennzeichnet,**
**daß** der Metallocenligand bzw. der π-Ligand ausgewählt ist aus den jeweils gegebenenfalls substituierten Cyclopentadienyl-, Indenyl- oder Fluorenylverbindungen.

**16.** Verwendung von Metallocenamidhalogeniden der Formel I

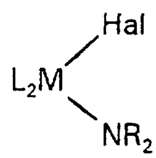

in welcher

L einen Metallocenliganden,
Hal ein Halogen aus der Gruppe F, Cl, Br und J,
M ein Metall aus der Gruppe III, IV oder V des Periodensystems oder der Lanthaniden und
R gleiche oder unterschiedliche geradkettige oder verzweigte, gesättigte oder ungesättigte Kohlenwasserstoffreste mit bis zu 8 C-Atomen, wobei die Amidogruppe $NR_2$ auch einen Heterocyclus mit bis zu 8 C-Atomen, gegebenenfalls unter Einschluß weiterer Heteroatome, bilden kann, darstellen zur Generierung eines aktiven Katalysatorsystem für
(Co-)Polymerisationsreaktionen durch geeignete Kombination mit einem Cokatalysator.

**17.** Verwendung nach Anspruch 16,
**dadurch gekennzeichnet,**
**daß** man das Metallocenamidhalogenid zusammen mit einem Alkylaluminiumoxan- oder Bor-Cokatalysator verwendet.

**18.** Verwendung nach Anspruch 17,
**dadurch gekennzeichnet,**
**dass** man als Cokatalysator MAO einsetzt.

**19.** Verwendung nach einem der Ansprüche 16 bis 18,
**dadurch gekennzeichnet,**
**dass** man als Metallocenamidhalogenid das -chlorid verwendet.

## Claims

**1.** Catalyst system for (co)polymerization reactions containing a metallocene amide halide of formula (I)

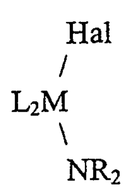

in which

L is a metallocene ligand,
Hal is a halogen from the group comprising F, Cl, Br and I,
M is a metal from group III, IV or V of the periodic table or from the lanthanides and
R represents identical or different straight-chained or branched, saturated or unsaturated hydrocarbon residues with up to 8 C atoms where the amido group $NR_2$ can also form a heterocycle with up to 8 C atoms which

may optionally incorporate additional heteroatoms and
a co-catalyst.

**2.** Catalyst system as claimed in claim 1,
wherein
the metal is titanium, zirconium or hafnium.

**3.** Catalyst system as claimed in claim 1 or 2,
wherein
Hal is chlorine.

**4.** Catalyst system as claimed in claim 1, 2 or 3,
wherein
the metallocene ligand is selected from cyclopentadienyl, indenyl or fluorenyl groupings each of which may be substituted.

**5.** Catalyst system as claimed in one of the previous claims,
wherein
it contains an alkylaluminoxane or a boron co-catalyst as the co-catalyst.

**6.** Catalyst system as claimed in claim 5,
wherein
it contains MAO.

**7.** Metallocene amide halides of formula (I)

Hal
/
$L_2M$
\
$NR_2$

in which

L is a metallocene ligand with the exception of unsubstituted or non-bridged cyclopentadienyl disubstituted with alkyl,
Hal is a halogen from the group comprising F, Cl, Br and I,
M is a metal from group III, IV or V of the periodic table or from the lanthanides and
R represents identical or different straight-chained or branched, saturated or unsaturated hydrocarbon residues with up to 8 C atoms where the amido group $NR_2$ can also form a heterocycle with up to 8 C atoms which may optionally incorporate additional heteroatoms.

**8.** Metallocene amide halide as claimed in claim 7,
wherein
both substituents L on the metal together represent a bivalent bridged ligand.

**9.** Metallocene amide halide as claimed in claim 8,
wherein
the bivalent bridged ligand is bound to the metal via two $\pi$ ligands.

**10.** Metallocene amide halide as claimed in claim 8,
wherein
the divalent bridged ligand is bound to the metal vial a $\pi$ ligand and a residue R* bound thereto, the residue R* being a hydrocarbon chain of up to 5 atoms in length which optionally contains heteroatoms.

**11.** Metallocene amide halide as claimed in claim 10, wherein the residue R* contains an amido group via which it is bound to the metal.

**12.** Metallocene amide halide as claimed in claim 10 or 11, wherein R* contains a silyl group and in particular a dimethylsilyl group.

**13.** Metallocene amide halide as claimed in one of the claims 7 to 12, wherein the metal is titanium, zirconium or hafnium.

**14.** Metallocene amide halide as claimed in one of the claims 7 to 13, wherein Hal denotes chlorine.

**15.** Metallocene amide halide as claimed in one of the claims 7 to 14, wherein the metallocene ligand or the π ligand is selected from cyclopentadienyl, indenyl or fluorenyl compounds each of which may be substituted.

**16.** Use of metallocene amide halides of formula I

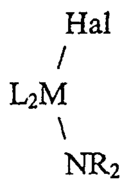

in which

L is a metallocene ligand,
Hal is a halogen from the group comprising F, Cl, Br and I,
M is a metal from group III, IV or V of the periodic table or from the lanthanides and
R represents identical or different straight-chained or branched, saturated or unsaturated hydrocarbon residues with up to 8 C atoms where the amido group $NR_2$ can also form a heterocycle with up to 8 C atoms which may optionally incorporate additional heteroatoms, to generate an active catalyst system for (co)polymerization reactions by suitable combination with a co-catalyst.

**17.** Use as claimed in claim 16, wherein the metallocene amide halide is used together with an alkylaluminiumoxane or boron co-catalyst.

**18.** Use as claimed in claim 17, wherein MAO is used as the co-catalyst.

**19.** Use as claimed in one of the claims 16 to 18, wherein the chloride is used as the metallocene amide halide.

**Revendications**

**1.** Système catalyseur pour des réactions de (co)polymérisation, contenant un halogénure de métallocénamide de

formule (I)

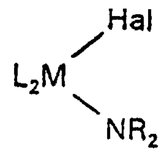

dans laquelle

L représente un ligand de métallocène,
Hal représente un halogène du groupe constitué par F, Cl, Br et I,
M représente un métal du groupe III, IV ou V du système périodique ou du groupe des lanthanides, et
les R représentent des restes hydrocarbonés identiques ou différents d'au plus 8 atomes de carbone, linéaires ou ramifiés, saturés ou insaturés, le groupe amido $NR_2$ pouvant aussi former un hétérocycle d'au plus 8 atomes de carbone, comprenant éventuellement d'autres hétéroatomes,

et un cocatalyseur.

2. Système catalyseur selon la revendication 1, **caractérisé en ce que** le métal est le titane, le zirconium ou le hafnium.

3. Système catalyseur selon la revendication 1 ou 2, **caractérisé en ce que** Hal représente le chlore.

4. Système catalyseur selon la revendication 1, 2 ou 3, **caractérisé en ce que** le ligand du métallocène est choisi parmi des groupes cyclopentadiényle, indényle ou fluorényle éventuellement substitués.

5. Système catalyseur selon l'une des revendications précédentes, **caractérisé en ce qu'**il contient comme cocatalyseur un alkylaluminoxane ou un cocatalyseur à base de bore.

6. Système catalyseur selon la revendication 5, **caractérisé en ce que** en qu'il contient du MAO (méthylaluminoxane).

7. Halogénure de métallocénamide de formule (I)

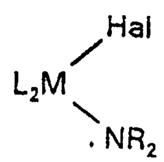

dans laquelle

L représente un ligand de métallocène, à l'exception d'un groupe cyclopentadiényle non ponté, non substitué ou substitué par deux restes alkyle,
Hal représente un halogène du groupe constitué par F, Cl, Br et I,
M représente un métal du groupe III, IV ou V du système périodique ou du groupe des lanthanides, et
les R représentent des restes hydrocarbonés identiques ou différents d'au plus 8 atomes de carbone, linéaires ou ramifiés, saturés ou insaturés, le groupe amido $NR_2$ pouvant aussi former un hétérocycle d'au plus 8 atomes de carbone, comprenant éventuellement d'autres hétéroatomes.

8. Halogénure de métallocénamide selon la revendication 7, **caractérisé en ce que** les deux substituants L sur le métal représentent ensemble un ligand ponté divalent.

9. Halogénure de métallocénamide selon la revendication 8, **caractérisé en ce que** le ligand ponté divalent est lié

au métal par l'intermédiaire de deux ligands π.

**10.** Halogénure de métallocénamide selon la revendication 8, **caractérisé en ce que** le ligand ponté divalent est lié au métal par l'intermédiaire d'un ligand π et d'un reste R* qui lui est lié, le reste R* étant une chaîne hydrocarbonée contenant éventuellement des hétéroatomes et ayant une longueur de chaîne d'au plus 5 atomes.

**11.** Halogénure de métallocénamide selon la revendication 10, **caractérisé en ce que** le reste R* contient un groupe amido par l'intermédiaire duquel il est lié au métal.

**12.** Halogénure de métallocénamide selon la revendication 10 ou 11, **caractérisé en ce que** R* contient un groupe silyle et en particulier un groupe diméthylsilyle.

**13.** Halogénure de métallocénamide selon l'une des revendications 7 à 12, **caractérisé en ce que** le métal est le titane, le zirconium ou le hafnium.

**14.** Halogénure de métallocénamide selon l'une des revendications 7 à 13, **caractérisé en ce que** Hal représente le chlore.

**15.** Halogénure de métallocénamide selon l'une des revendications 7 à 14, **caractérisé en ce que** le ligand du métallocène ou le ligand π est choisi parmi des groupes cyclopentadiényle, indényle ou fluorényle éventuellement substitués.

**16.** Utilisation d'halogénures de métallocénamide de formule I

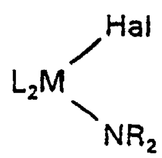

dans laquelle

L représente un ligand de métallocène,
Hal représente un halogène du groupe constitué par F, Cl, Br et I,
M représente un métal du groupe III, IV ou V du système périodique ou du groupe des lanthanides, et
les R représentent des restes hydrocarbonés identiques ou différents d'au plus 8 atomes de carbone, linéaires ou ramifiés, saturés ou insaturés, le groupe amido $NR_2$ pouvant aussi former un hétérocycle d'au plus 8 atomes de carbone, comprenant éventuellement d'autres hétéroatomes,

pour la production d'un système catalyseur actif pour des réactions de (co)polymérisation par combinaison appropriée avec un cocatalyseur.

**17.** Utilisation selon la revendication 16, **caractérisée en ce que** l'on utilise l'halogénure de métallocénamide avec un cocatalyseur de type alkylaluminoxane ou bore.

**18.** Utilisation selon la revendication 17, **caractérisée en ce que** l'on utilise du MAO comme cocatalyseur.

**19.** Utilisation selon l'une des revendications 16 à 18, **caractérisée en ce que** l'on utilise le chlorure comme halogénure de métallocénamide.